# EUROPÄISCHE PATENTSCHRIFT

(11) **EP 2 311 673 B1**
(45) Veröffentlichungstag und Bekanntmachung des Hinweises auf die Patenterteilung: **02.11.2011**
(21) Anmeldenummer: 10187673.8
(22) Anmeldetag: 15.10.2010
(51) Int. Cl.: B60G 17/06, B62D 63/06

(54) **Anhänger für einen Trailerzug**
Trailer for a trailer train
Remorqueur pour un train à remorque

(30) Priorität: 15.10.2009 DE 202009013359 U
(43) Veröffentlichungstag der Anmeldung: 20.04.2011
(73) Patentinhaber: LR Intralogistik GmbH, 84079 Bruckberg (DE)
(72) Erfinder: Berghammer, Fritz, 84079, Bruckberg (DE)
(74) Vertreter: Gustorf, Gerhard

(56) Entgegenhaltungen:
- EP-A2- 2 161 182
- DE-A1-102007 022 525
- DE-U1- 20 313 955

## Beschreibung

Die Erfindung betrifft einen Anhänger für einen Trailerzug nach dem Oberbegriff des Anspruchs 1.

In der maschinellen Serienfertigung von Produkten, beispielsweise von Automobilen, werden die einzelnen Arbeitsstationen häufig über Trailerzüge mit den erforderlichen Bauteilen versorgt. Diese Trailerzüge bestehen aus einem Zugfahrzeug und einer Mehrzahl von Anhängern, auf denen die erforderlichen Bauteile transportiert werden. Im allgemeinen sind diese Bauteile auf Paletten oder in Gitterboxen untergebracht, die in abgesenkter Lage des Tragrahmens des Anhängers be- und entladen und für den Fahrbetrieb angehoben werden.

Sowohl in DE 603 00 189 T2 als auch in DE 10 2007 022 525 A1 ist ein Trailerzuganhänger beschrieben und dargestellt, der einen in Draufsicht E-förmigen Tragrahmen mit einem mittig angeordneten Fahrwerk hat. Auf diesen Tragrahmen kann von einer Seite her eine Last aufgesetzt werden, beispielsweise ein fahrbarer Transportgutwagen. Beim Transport laufen dann, geführt vom Tragrahmen des Anhängers, die Transportgutwagen auf eigenen Rollen im Zugverbund mit. Dabei ergibt sich das Problem, dass einzelne Anhänger im Zugverbund zusammen mit den mitgeführten, auf eigenen Rollen laufenden Transportgutwagen aus der Fahrspur ausbrechen können, insbesondere beim Durchfahren enger Kurven.

Zur Vermeidung dieses Nachteils ist in der gattungsbildenden, nicht vorveröffentlichten Anmeldung DE 10 2008 060 962 eine Hubeinrichtung vorgesehen, die den Tragrahmen zusammen mit der darauf liegenden Last, z. B. ein Transportgutwagen (Trolley), nach dem Beladen anhebt, so dass während des Transports der Trolley mit seinen Rollen nicht auf der Fahrbahn abrollt, wodurch die Spurhaltung und Manövrierfähigkeit des Trailerzugs erheblich verbessert werden. Die Hubeinrichtung wird dabei für den gesamten Trailerzug zentral angesteuert, beispielsweise durch ein im Zugfahrzeug angebrachtes Schaltventil, das die Hubeinrichtung in jedem Anhänger ansteuert, sobald der Fahrer auf seinem Fahrersitz Platz genommen hat (Fahrererkennung der Zugmaschine). Bei einem derartigen System ist es jedoch nicht möglich, wahlweise nur einen oder einen Teil der Anhänger im Trailerzug anzuheben oder abzusenken.

Der Erfindung liegt die Aufgabe zugrunde, einen Anhänger für einen Trailerzug zur Verfügung zu stellen, dessen Hubeinrichtung unabhängig vom Zugfahrzeug ist und unabhängig von dessen Energieversorgung betätigt und angesteuert werden kann.

Bei einem Anhänger der im Oberbegriff des Anspruchs 1 angegebenen Gattung wird diese Aufgabe erfindungsgemäß dadurch gelöst, dass die Hubeinrichtung eine hydraulischen Druck erzeugende Pumpe mit Rotationsantrieb aufweist, der über ein Getriebe mit wenigstens einem der am Boden abrollenden Räder gekoppelt ist. Dabei ist es vorteilhaft, wenn die Pumpe so ausgelegt ist, dass sie in beiden Drehrichtungen der Räder Druck erzeugt.

Mit dieser Lösung steht ein Anhänger für Trailerzüge zur Verfügung, dessen Hubeinrichtung eine vom Zugfahrzeug unabhängige Energieversorgung hat, weil der für die Betätigung notwendige Druck beim Fahren im Zugverbund erzeugt wird.

Dabei ist es vorteilhaft, wenn die Druckleitung der Pumpe mit einem Druckspeicher verbunden ist, der über ein Schaltventil mit dem wenigstens einen Hubzylinder verbunden ist. Der während der Fahrt erzeugte Druck wird in dem Druckspeicher ("Druckblase") gespeichert und bei Bedarf über das Schaltventil zur Betätigung des Hubzylinders abgerufen.

Für den Rotationsantrieb der Pumpe dient vorzugsweise ein Reibradgetriebe; alternativ sind auch Ketten- oder Zahnriemen möglich.

Damit jeder einzelne Anhänger innerhalb des Routenzuges problemlos relativ zu den anderen Anhängern abgesenkt werden kann, ist vorgesehen, die Deichsel, welche die einzelnen Anhänger miteinander verbindet, als Parallelogrammgelenke auszubilden. Derartige Deichseln erlauben Vertikalbewegungen des Anhängers, wobei die horizontale Lage aller Tragrahmen innerhalb des Routenzuges nicht beeinträchtigt wird.

Weitere Merkmale und Vorteile der Erfindung ergeben sich aus den Ansprüche und aus der folgenden Beschreibung von Ausführungsbeispielen, die in der Zeichnung dargstellt sind. Es zeigen:
Figur 1 eine Schrägansicht von oben eines Anhängers für einen Trailerzug nach der Erfindung,
Figur 2 in vergrößertem Maßstab die Vorderansicht des Anhängers der Figur 1,
Figur 3 eine Seitenansicht des Anhängers,
Figur 4 eine Draufsicht des Anhängers,
Figur 5 eine Schnittdarstellung in der Ebene V-V der Figur 4,
Figur 6 einen Querschnitt durch den Tragrahmen im Bereich seines Querträgers,
Figur 7 eine bezüglich Figur 6 um 180° gedrehte Darstellung des Querträgers in einer außermittigen Ebene,
Figur 8 ein Schaltschema zur Darstellung der Hydraulikpumpe, die über einen Druckspeicher zwei Hydraulikzylinder der Hubeinrichtung betätigt,
Figur 9 die Ansicht einer Variante der Hydraulikpumpe und
Figur 10 die Hydraulikpumpe der Figur 9 in einer Schnittdarstellung.

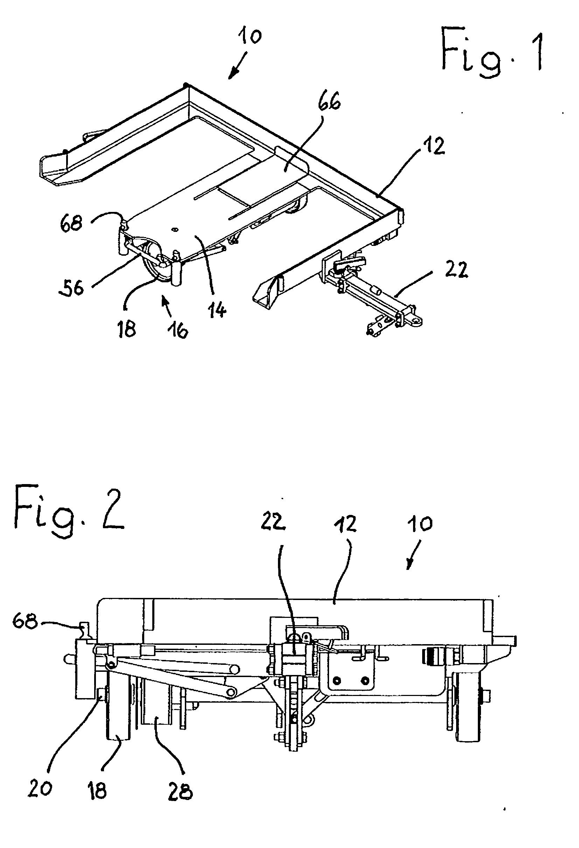

Der in den Figuren 1 bis 7 dargestellte Anhänger 10 für einen Trailerzug hat einen in Draufsicht E-förmigen Tragrahmen 12 mit einem mittleren Querträger 14, an dessen Unterseite ein Fahrwerk 16 angebracht ist. Das Fahrwerk 16 besteht aus zwei am Boden abrollenden Rädern 18, die auf einer Starrachse 20 gelagert sind.

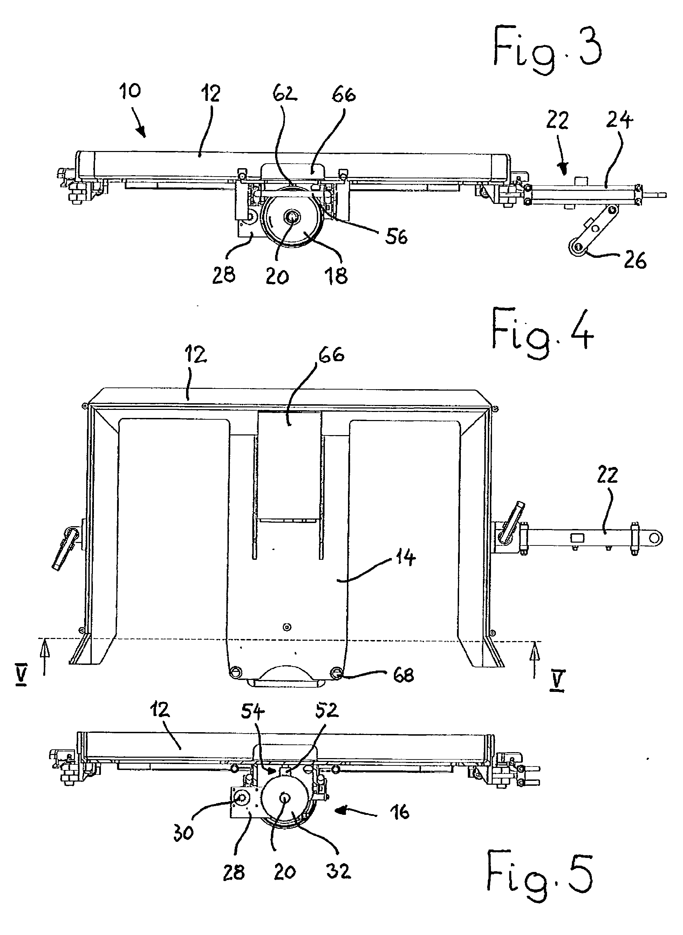

Die Figuren 1, 3 und 4 zeigen, dass der Anhänger 10 mit einer Deichsel 22 ausgerüstet ist, damit er mit einem weiteren Anhänger oder dem Zugfahrzeug gekoppelt werden kann. Die Deichsel 22 ist als Parallelogrammgelenk 24 ausgebildet. Im abgekoppelten Zustand des Anhängers 10 dient zur Abstützung ein Stützrad 26 (vgl. Figur 3).

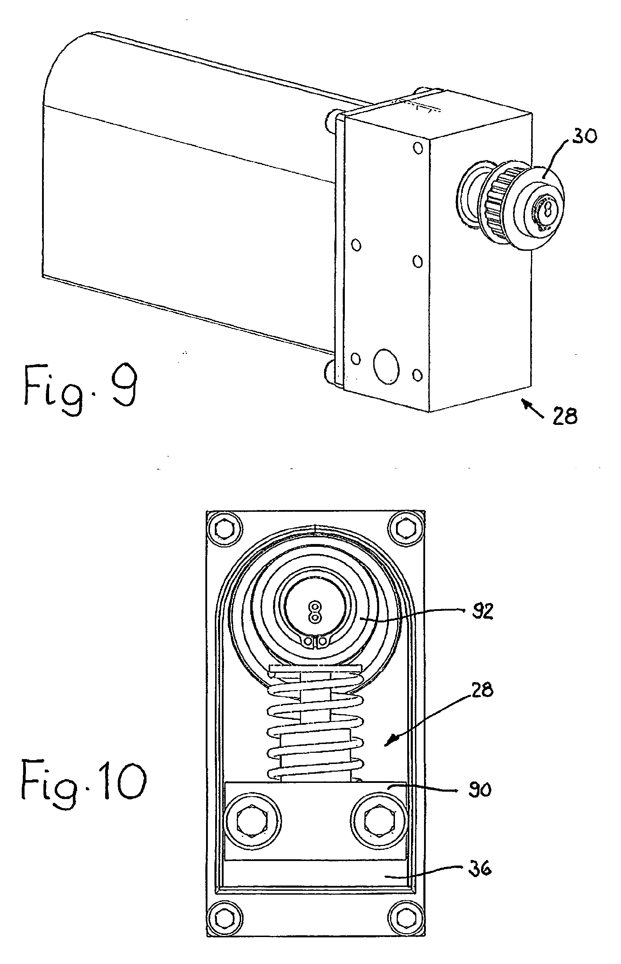

Wie vor allem die Figuren 3 und 5 zeigen, ist an der Unterseite des Querträgers 14 eine Pumpe 28 angebracht, die einen Rotationsantrieb hat. Der Rotationsantrieb, von dem in den Figuren 5 und 9 ein Antriebsritzel 30 zu erkennen ist, ist über ein Getriebe, beispielsweise ein Kettengetriebe oder ein Zahnriemen, mit einem Antriebsrad 32 gekoppelt, das fest mit einem der beiden auf einer Starrachse 20 gelagerten Räder 18 verbunden ist. Während der Fahrt treibt dadurch das Rad 18 über das Antriebsrad 32 das Ritzel 30 der Pumpe 28 an, welche einen hydraulischen Druck erzeugt.

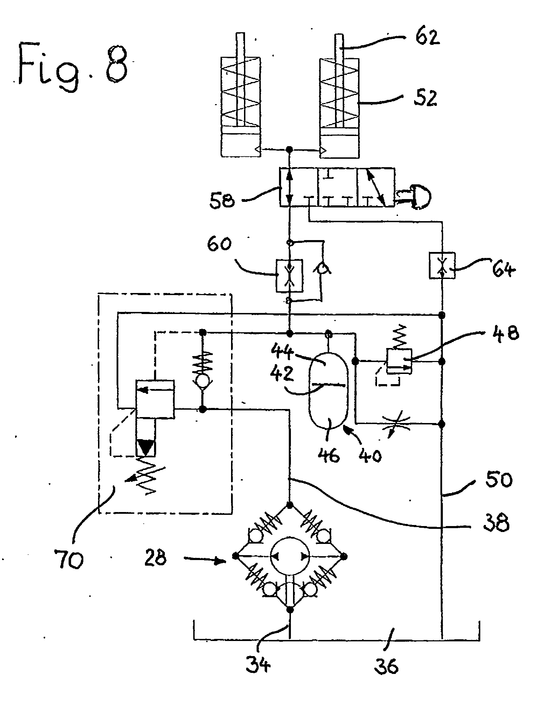

Das Schaltschema der Figur 8 zeigt eine Pumpe 28, die hier als Kreiselpumpe oder Drehkolbenpumpe ausgebildet ist. Sie hat einen Saugstutzen 34, der aus einem Tank 36 Hydraulikflüssigkeit ansaugt und über eine Druckleitung 38 und einen Ventilblock 70 in einen Druckspeicher 40 fördert. Der Druckspeicher 40 ist über eine Membrane 42 in einen Hydraulikraum 44 und einen Druckspeicherraum 46 unterteilt. Der Druckspeicherraum 46 ist hier als Blasenspeicher ausgebildet. Alternativ ist auch ein Federspeicher möglich.

Die in Figur 8 gezeigte Schaltung ist so ausgelegt, dass der Druckspeicher 40 bei einem einstellbaren Maximaldruck, beispielsweise 200 bar, über ein Sicherheitsventil 48 geöffnet wird, so dass die überschüssige Flüssigkeit durch eine Leitung 50 in den Tank 36 zurückfließt.

Zum Anheben des Tragrahmens 12 relativ zum Fahrwerk 16 ist dieses über zwei Hydraulikzylinder 52 (vgl. auch Figur 5) einer Hubeinrichtung 54 auf der Starrachse 20 abgestützt.

Wie die Figuren 1 und 4 sowie 6 und 7 zeigen, ist auf dem Querträger 14 ein Schieber 66 angeordnet, der im Stillstand des Anhängers 10 und bei abgesenktem Tragrahmen 12 beim Beladen über die eingeschobene Last mechanisch gegen die Längsseite des Tragrahmens 12 verschoben wird. Dabei betätigt der Schieber 66 ein in Figur 8 gezeigtes Schaltventil 58, das hier als Dreiwegeventil dargestellt ist. In der in Figur 8 gezeigten Stellung des Schaltventils 58 strömt dann Druckflüssigkeit aus dem Hydraulikraum 44 des Druckspeichers 40 über ein Drosselventil 60 in die beiden Hydraulikzylinder 52, deren Kolbenstangen 62 den Tragrahmen 12 anheben.

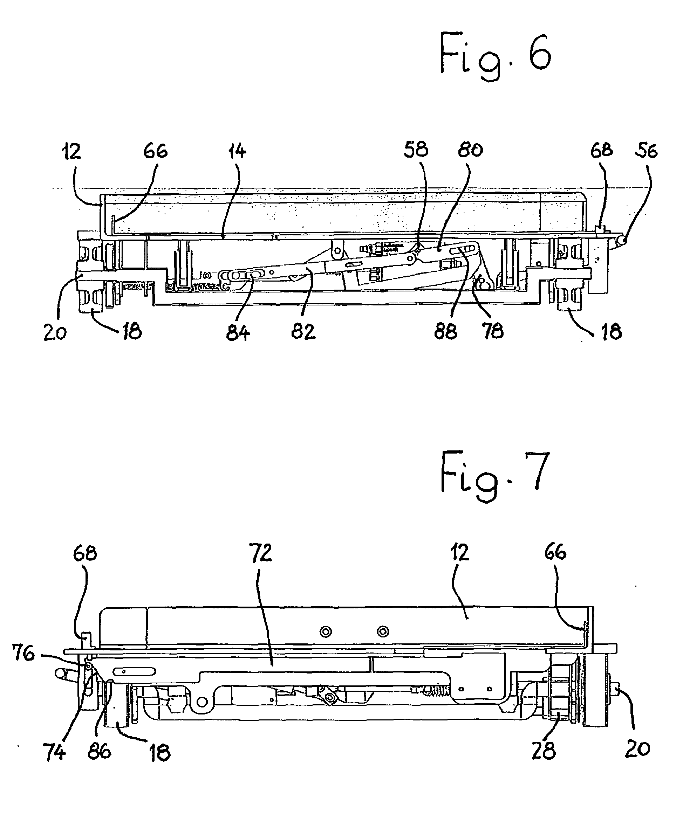

In den Figuren 6 und 7 ist zu erkennen, dass der Schieber 66 über eine Kulissensteuerstange 72 mechanisch mit zwei Bolzen 68 verbunden ist, die am freien Ende des Querträgers 14 vertikal verstellbar angebracht sind. In der in Figur 7 gezeigten Einschubstellung des Schiebers 66 gelangen die beiden Bolzen 68 unter der Einwirkung einer Federkraft durch eine Nockensteuerung in ihre nach oben vorstehende Endstellung, in der sie die Last auf dem Tragrahmen 12 sichern. Die Nockensteuerung besteht aus einer am freien Ende der Kulissensteuerstange 72 ausgebildeten Führungsschräge 74, die mit einem von dem Bolzen 68 abstehenden Stift 76 zusammenwirkt.

Der Anhänger 10 mit dem beladenen und angehobenen Tragrahmen 12 kann nun zu dem gewünschten Ziel gefahren werden.

Am Querträger 14 ist, wie vor allem aus Figur 1 ersichtlich, ein Fußhebel 56 schwenkbar gelagert, der zum Entladen niedergedrückt wird. In einer ersten Phase zieht er dabei über einen Gelenkhebel 78 (vgl. Figur 6) und eine Ventilschaltstange 80 das Schaltventil 58 in seine in Figur 8 rechte Öffnungsstellung, wodurch die Hydraulikflüssigkeit aus den beiden Hydraulikzylindern 52 über ein Drosselventil 64 in den Tank 36 zurückfließt. Das Drosselventil 64 hat dabei die Aufgabe, die Sinkgeschwindigkeit des Tragrahmens 12 zu bremsen; das bereits erwähnte Drosselventil 60 der Schaltung dient hingegen zur Regulierung der Hubgeschwindigkeit beim Anheben des Tragrahmens 12.

In einer zweiten Phase zieht der Gelenkhebel 78 parallel zur Ventilschaltstange 80 einen Zugstab 82 in Figur 6 nach rechts, bis eine Auswerferachse 94 des Schiebers 66 am Ende eines der Verzögerung dienenden Langlochs 84 im Zugstab 82 zum Anschlag kommt. Auf diese Weise wird der Schieber 66 erst dann zur offenen Seite des Tragrahmens 12 bewegt, wenn dieser vollständig abgesenkt ist.

Mit der Ausschubbewegung des Schiebers 66 wird auch die Kulissensteuerstange 72 in Figur 7 nach links bewegt, so dass deren Führungsschräge 74 über den Stift 76 den Bolzen 68 nach unten zieht, damit die Last zum Entladen freigegeben wird. Am Ende des Verschiebewegs der Kulissensteuerstange 72 schnappt der Stift 76 in einen Rastsitz 86 der Stange 72 ein.

In der erläuterten Auswurfstellung des Schiebers 66 wird der Fußhebel 56 freigegeben, so dass er von einer Rückzugsfeder wieder in seine obere Ausgangsstellung zurückkehrt. Um dabei ein Öffnen des Schaltventils 58 zu verhindern, was zu einem Anheben des Tragrahmens 12 führen würde, ist in der Ventilschaltstange 80 ein Langloch 88 vorgesehen, so dass der Fußhebel 56 frei nach oben federn kann und dabei das Schaltventil 58 nicht betätigt.

In den Figuren 9 und 10 ist die Möglichkeit angedeutet, die Pumpe 28 als exzentrisch angetriebene Kolbenpumpe auszubilden, deren Kolben 90 von einer Extenterschiebe 92 bewegt wird. Diese Pumpe 28 benötigt keinen in Figur 8 gezeigten Saugstutzen 34, da sie unmittelbar in den Tank 36 eintaucht. Sie hat den besonderen Vorteil eines besseren Wirkungsgrads, ist äußerst robust und benötigt nur einen kleinen Bauraum.

## Patentansprüche

1. Anhänger für einen Trailerzug, umfassend einen Lasten aufnehmenden Tragrahmen (12) mit einem in Fahrtrichtung mittig angeordneten Fahrwerk (16), das zwei seitlich an einer Achse (20) gelagerte Räder (18) hat und mit einer Hubeinrichtung (54) mit wenigstens einem Hydraulikzylinder (52) zur Höhenverstellung des Tragrahmens (12) relativ zum Fahrwerk (16) verbunden ist, wobei der Tragrahmen (12) über wenigstens eine Deichsel (22) mit dem Tragrahmen (12) eines weiteren Anhängers (10) kuppelbar ist, **dadurch gekennzeichnet, dass** die Hubeinrichtung (54) eine hydraulischen Druck erzeugende Pumpe (28) mit Rotationsantrieb aufweist, der über ein Getriebe mit wenigstens einem der am Boden abrollenden Räder (18) gekoppelt ist.

2. Anhänger nach Anspruch 1, **dadurch gekennzeichnet, dass** die Pumpe (28) so ausgelegt ist, dass sie in beiden Drehrichtungen der Räder (18) Druck erzeugt.

3. Anhänger nach Anspruch 1 oder 2, **dadurch gekennzeichnet, dass** das Getriebe ein Reibradgetriebe ist.

4. Anhänger nach Anspruch 1 oder 2, **dadurch gekennzeichnet, dass** das Getriebe einen Ketten- oder Riementrieb hat.

5. Anhänger nach einem der vorhergehenden Ansprüche, **dadurch gekennzeichnet, dass** die Druckleitung (38) der Pumpe (28) mit einem Druckspeicher (40) verbunden ist, der über ein Schaltventil (58) mit dem wenigstens einen Hubzylinder (52) verbunden ist.

6. Anhänger nach Anspruch 5, **dadurch gekennzeichnet, dass** der Druckspeicher (40) mittels einer Membrane (42) in einen Hydraulikraum (44) und einen Druckspeicherraum (46) unterteilt ist, der als Blasenspeicher oder Federspeicher ausgebildet ist.

7. Anhänger nach Anspruch 5 oder 6, **dadurch gekennzeichnet, dass** auf einem Querträger (14) des Tragrahmens (12) ein quer zur Fahrtrichtung beweglicher Schieber (66) gelagert ist, der in Wirkverbindung mit dem Schaltventil (58) ist.

8. Anhänger nach Anspruch 7, **dadurch gekennzeichnet, dass** der Schieber (66) zum horizontalen Ausschieben der Last aus dem Tragrahmen (12) mit einem Fußhebel (56) mechanisch verbunden ist.

9. Anhänger nach Anspruch 7 oder 8, **dadurch gekennzeichnet, dass** der Schieber (66) mechanisch mit Bolzen (68) zur Sicherung der Last auf dem Tragrahmen (12) verbunden ist, die bei der Ausschubbewegung des Schiebers (66) über eine Kulissensteuerstange (72) in eine Freigabestellung abgesenkt werden.

10. Anhänger nach einem der vorhergehenden Ansprüche, **dadurch gekennzeichnet, dass** die Deichsel (22) aus einem Parallelogrammgelenk (24) besteht.

## Claims

1. Trailer for a trugger train, comprising a load carrying frame (12) having a centrally positioned bogie (16) provided with two lateral wheels (18) rotably mounted on an axle (20) and an elevator assembly (54) provided with at least one hydraulic lifting cylinder (52) for vertically moving the frame (12) in relation to said bogie (16), said frame (12) having at least one drawbar (22) for coupling it with a frame (12) of a further trailer (10), **characterized in that** said elevator assembly (54) comprises a hydraulic pressure generating pump (28) with a rotary drive assembly which is coupled through a transmission with at least one of said wheels (18) rolling on the floor.

2. Trailer according to claim 1 wherein said pump (28) is designed to generate pressure in both senses of rotation of said wheels (18).

3. Trailer according to claim 1 or 2 wherein said transmission is made up of a friction wheel gear.

4. Trailer according to claim 1 or 2 wherein said transmission comprises a chain or belt drive.

5. Trailer according to any of the preceding claims wherein the pressure pipe (38) of said pump (28) is connected with an accumulator (40) which is coupled through at least one reverse valve (58) with said at least one lifting cylinder (52).

6. Trailer according to claim 5, wherein said accumulator (40) is split by means of a diaphragm (42) into an hydraulic chamber (44) and a pressure accumulating chamber (46) which is in the form of a bubble store or a spring actuator.

7. Trailer according to claim 5 or 6, wherein said frame (12) comprises a crossbeam (14) on which a slide (66) is movably mounted in a direction transverse to the travelling direction and operationally coupled with said valve (58).

8. Trailer according to claim 7, wherein a pedal (56) is mechanically connected to said slide (66) for horizontally ejecting the load.

9. Trailer according to claim 7 or 8, wherein said slide (66) is mechanically coupled with bolts (68) securing the load on said frame (12), said bolts (68) being lowered into a clearing position by means of a rocking lever (72) when the slide (66) is ejecting the load.

10. Trailer according to any of the preceding claims, wherein said drawbar (22) is made up of a parallelogram linkage (24).

## Revendications

1. Remorque pour train de convoyage, comprenant un cadre (12) pour recevoir une charge et muni d'un bogie central (16) avec deux roues (18) qui sont monteés aux côtés d'un essieu (20), ledit cadre (12) etant relié à un élévateur (54) avec au moins un cylindre hydraulique (52) pour déplacer verticalement le cadre (12) à l'égard du bogie (16), ledit cadre (12) pouvant être relié par au moins un timon (22) au cadre (12) d'un autre remorque (10), **caractérisé par le fait que** l'élévateur (54) est muni d'une pompe (28) pour la génération de pression hydraulique laquelle présente un moteur à rotation qui est relié au moyen d'une transmission à au moins une des roues (18) roulant sur le sol.

2. Remorque selon la revendication 1, **caractérisé par le fait que** la pompe (28) est étudiée pour la génération de pression dans les deux sens de rotation des roues (18).

3. Remorque selon la revendication 1 ou 2, **caractérisé par le fait que** la transmission est du type à roue de friction.

4. Remorque selon la revendication 1 ou 2, **caractérisé par le fait que** la transmission est du type à courroie ou à chaîne.

5. Remorque selon une des revendications précédantes, **caractérisé par le fait que** la conduite de pression (38) de la pompe (28) est reliée à un accumulateur hydraulique (40) lequel est relié à travers une valve de commutation (58) au cylindre hydraulique (52).

6. Remorque selon la revendication 5, **caractérisé par le fait que** l'accumulateur hydraulique (40) est divisé au moyen d'un diaphragme (42) en une chambre hydraulique (44) et en une chambre d'accumulation de pression (46) du type à soufflet ou à ressort.

7. Remorque selon la revendication 5 ou 6, **caractérisé par le fait que** le cadre (12) est muni d'une traverse (14) sur laquelle est logé un pousseur (66) apt à être deplacé transversalement au sens de marche et relié à ladite valve de commutation (58).

8. Remorque selon la revendication 7, **caractérisé par le fait que** le pousseur (66) apt à éjecter la charge du cadre (12) est mécaniquement relié à une pédale (56).

9. Remorque selon la revendication 7 ou 8, **caractérisé par le fait que** le pousseur (66) est mécaniquement accouplé à des goupilles de retenue (68) de la charge sur le cadre (12) lesquelles sont abaissées, lors de l'éjection du pousseur (66), par une tige de commande à coulisse (72) dans une position de déblocage.

10. Remorque selon une de revendications precedentes, **caractérisé par le fait que** ledit timon (22) est du type à parallélogramme articulé (24).
